# EUROPÄISCHE PATENTSCHRIFT

(11) **EP 0 465 831 B1**
(45) Veröffentlichungstag und Bekanntmachung des Hinweises auf die Patenterteilung: **28.12.1994**
(21) Anmeldenummer: 91109257.5
(22) Anmeldetag: 06.06.1991
(51) Int. Cl.: F16D 59/02, F16D 65/48, B66D 5/14

(54) **Sicherheitsscheibenbremse für Aufzüge**
Safety disc brake for elevators
Frein à disque de sécurité pour ascenseurs

(30) Priorität: 12.07.1990 CH 2327/90
(43) Veröffentlichungstag der Anmeldung: 15.01.1992
(73) Patentinhaber: INVENTIO AG, CH-6052 Hergiswil NW (CH)
(72) Erfinder: Vertesy, Josef, CH-6006 Luzern (CH); Bissig, Toni, CH-6052 Hergiswil (CH)

(56) Entgegenhaltungen:
- DE-A- 2 309 757
- DE-A- 2 343 918
- DE-A- 2 617 882
- FR-A- 2 365 725
- FR-A- 2 450 978
- GB-A- 880 841
- US-A- 2 785 710

## Beschreibung

Die Erfindung beschreibt eine Sicherheitsscheibenbremse für Aufzüge bestehend aus zwei auf Tragbolzen drehbar gelagerten Bremshebeln mit ungleich langen Hebelarmen, sowie mit Bremsschuhen und Bremsbelägen, welche eine Bremsscheibe mittels einer zwischen den jeweils längeren Bremshebelseiten wirkenden Federkraft beaufschlagen und welche durch eine auf der gleichen Seite wirkenden elektromagnetischen Gegenkraft von der Bremsscheibe abgehoben werden mittels zweier überlappungsfrei und mechanisch voneinander unabhängig sich bewegender Bremshebel und einem, diese gegen die Bremsfederkraft betätigenden Elektromagneten, bestehend aus einem mit den Bremshebeln verbundenen Topfmagnet mit Ankerplatte.

Der Begriff Sicherheit in der Bremsbezeichnung bezieht sich auf diesbezügliche Vorschriften für Aufzugsbremsen, nach welchen diese nach dem sogenannten Zweikreisprinzip arbeiten müssen. Es ist bekannt, an einer Sicherheitsbremse für Aufzüge den elektromagnetischen Antrieb für die Lüftfunktion in zweifacher Ausführung vorzusehen, um eben den genannten Vorschriften zu entsprechen.

Weitergehende Entwicklungen führten dahin, einen einzigen Elektromagneten, jedoch mit zwei Magnetankern zu verwenden, den sogenannten Doppelspreizmagnet. Der Doppelspreizmagnet birgt jedoch eine Gefahr in sich, weil die in einen Elektromagnet eintauchenden Magnetanker klemmen können, was der geforderten Sicherheit abträglich ist.

Dass möglichst keine sich gegenseitig eindringende Teile mehr vorhanden sind, wird die Verwendung von sogenannten Topfmagneten empfohlen, wobei der Magnetanker als flache Ankerplatte ausgebildet ist.

Die englische Patentschrift GB 880,841 beschreibt eine Scheibenbremse, die bezüglich mechanisch unabhängig voneinander arbeitenden Bremshebeln und der Verwendung eines Topfmagneten der einleitenden Schilderung entspricht. Das

Problem der Zentrierung des Systems im gelüfteten Zustand wird mittels einer, teilweise auf Schub beanspruchten, unterhalb des Topfmagneten 34 angeordneten Anschlagschraube 43 gelöst.

Der vorliegenden Erfindung liegt die Aufgabe zugrunde, eine Sicherheitsscheibenbremse zu schaffen, welche die Forderungen der Vorschriften besser erfüllt und allgemein grössere Funktionssicherheit bietet.

Diese Aufgabe wird durch die in den Ansprüchen gekennzeichnete Erfindung gelöst.

Die durch die Erfindung erreichten Vorteile sind im wesentlichen darin zu sehen, dass das System keine überlappenden und/oder sich gegenseitig durchdringende Teile aufweist.

In den Zeichnungen ist ein Ausführungsbeispiel dargestellt und es zeigen
die Figur 1 einen Querschnitt durch eine Scheibenbremse,
die Figur 2 ein Seitenansicht derselben Scheibenbremse und
die Figur 3 einen Nachstellmechanismus.

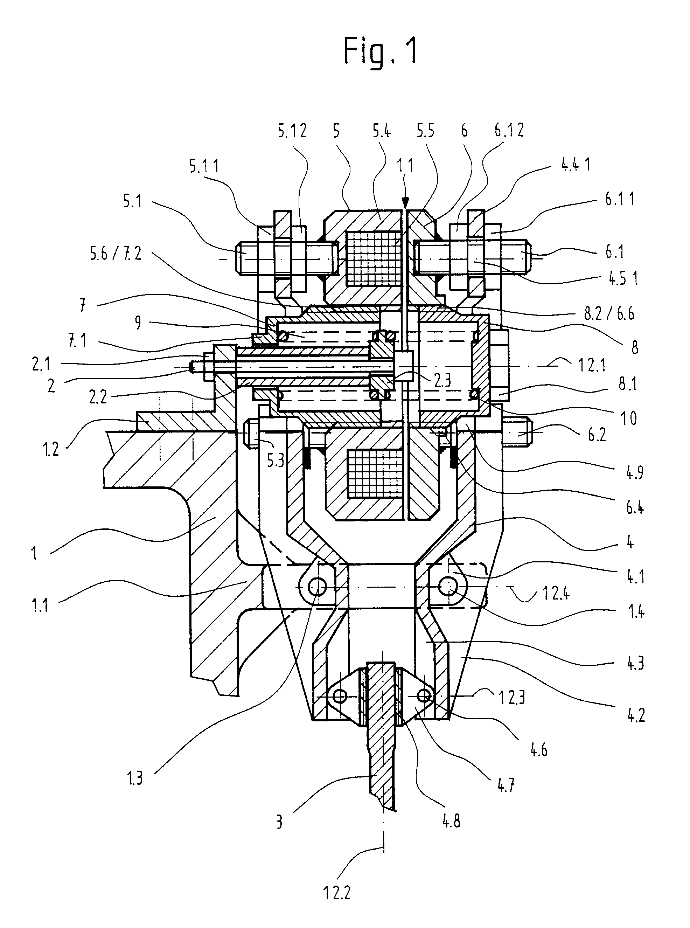

In der Figur 1 ist ein Maschinenteil mit 1 bezeichnet, welches ein Getriebegehäuse, ein Motorlagerschild oder Teil eines Lagerbockes sein kann. An der vertikalen Wand des Maschinenteils 1 ist horizontal abstehend ein Gabelsupport 1.1 angegossen. Durch dessen Gabelschenkel sind in einem Abstand zueinander und parallel zur vertikalen Maschinenteilwand zwei Tragbolzen 1.3 und 1.4 geführt. Im Gabelzwischenraum sind auf den Tragbolzen 1.3 und 1.4 je ein Bremshebel 4 drehbar gelagert. Ein kurzer nach unten führender Teil der Bremshebel 4 trägt je einen Bremsschuh 4.7 mit einem Bremsbelag 4.8. Die Bremsschuhe 4.7 sind mittels Bremsschuhbolzen 4.6 an den Bremshebeln 4 gelenkig befestigt. Die Bremshebel 4 weisen im Bereich der Bremsschuhe je eine innere Rippe 4.3 und über die halbe Länge nach oben je ein äussere Rippe 4.2 auf, welche zur Erhöhung der Biegefestigkeit der Bremshebel 4 dienen. Die Bremsschuhe 4.7 beziehungsweise die Bremsbeläge 4.8 liegen auf der Bremsfläche einer Bremsscheibe 3 auf. Im Bereich der Tragbolzen 1.3 und 1.4 sind die Bremshebel 4 je mit einem eingegossenen Lagerauge 4.1 verstärkt. Die Bremshebeldrehpunkte liegen auf einer Systemdrehebene 12.4 und die Bremsschuhbefestigungen auf einer Bremsebene 12.3. In einem Abstand nach oben, der beispielsweise zweimal grösser ist als jener zwischen der Bremsebene 12.3 und der Systemdrehebene 12.4 befindet sich eine Betätigungsachse 12.1. Alle mechanischen Teile sind, ausgenommen der Elektromagnet, symmetrisch zu einer Systemmittellinie 12.2 angeordnet. Ein Winkelsupport 1.2 ist bündig mit der rechten Kante der horizontalen Fläche des Maschinenteils 1 auf diesem festgeschschraubt und trägt im oberen Teil seines vertikalen Schenkels einen Zugbolzen 2, welcher an seinem rechten Ende auf der Systemmittellinie 12.2 ein Federanschlagzentrum 2.3 trägt. Das Federanschlagzentrum 2.3 ist mittels einer linken Mutter 2.1, und einer zwischen dem vertikalen Schenkel des Winkelsupports 1.2 und dem Federanschlagzentrum 2.3 angeordneten Distanzhülse 2.2 in der gezeigten Position gehalten. Konzentrisch zur Betätigungsachse 12.1 befindet sich eine linke Druckfeder 9 und ein rechte Druckfeder 10, welche mit einer linken Federhülse 7 und mit einer rechten Federhülse 8 gegen das Federanschlagzentrum 2.3 vorgespannt sind. Die linke Federhülse 7 weist auf ihrer linken äusseren Stirnseite einen Sechskantansatz 7.1 und die rechte Federhülse 8 an ihrer rechten äusseren Stirnseite einen Sechkantansatz 8.1 auf. An der zylindrischen Aussenfläche der linken Federhülse 7 ist ein Aussengewinde 7.2 eingeschnitten, welches in einem Innengewinde 5.6 in einem Topfmagnet 5 läuft, und an der zylindrischen Aussenfläche der rechten Federhülse 8 ist ein Aussengewinde 8.2 geschnitten, welches in einem Innengewinde 6.6 in einer Ankerplatte 6 läuft. Der Topfmagnet 5 besteht aus einem ringförmigen Magnetkörper 5.4, in welchen, ebenfalls ringförmig, eine Magnetspule 5.5 eingebettet ist. Die Ankerplatte 6 weist nach rechtsaussen eine über das Innengewinde 6.6 kragenförmige Verlängerung 6.4 zwecks Verbesserung der Verstellmöglichkeit für die rechte Druckfeder 10 auf. Zwischen dem Topfmagnet 5 und der Ankerplatte 6 besteht bei geschlossener Bremse ein Arbeitsluftspalt 11, welcher, je nach Baugrösse der Bremse ein bis zwei Millimeter betragen kann. Der Topfmagnet 5 ist durch drei eingeschweisste Schraubbolzen 5.1 / 5.2 / 5.3 und durch Mutternpaare 5.11 / 5.12, 5.21 / 5.22, 5.31 / 5.32 mit dem linken Bremshebel fest verschraubt. Die Ankerplatte 6 ist durch drei eingeschweisste Schraubbolzen 6.1 / 6.2 / 6.3 und durch Mutternpaare 6.11 / 6.12, 6.21 / 6.22, 6.31 / 6.32 mit dem rechten Bremshebel 4 fest verschraubt. In der Figur 1 sind die eingeschweissten Schraubbolzen 5.1 und 6.1. ganz, und die eingeschweissten Schraubbolzen 5.2 und 6.2 teilweise sichtbar.

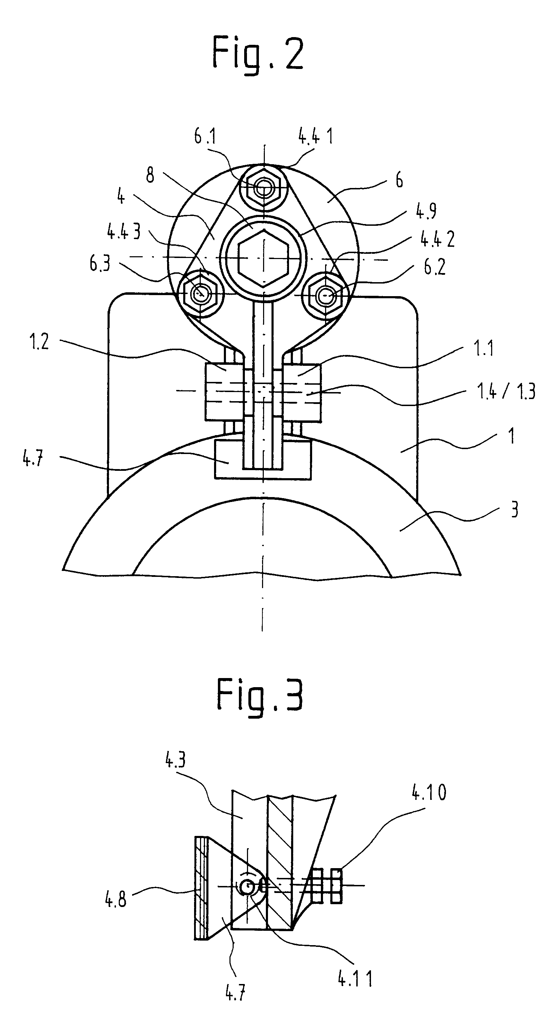

In der Figur 2 sind die drei am Umfang gleichmässig verteilten und nach aussen vorstehenden Befestigungsaugen mit 4.41, 4.42 und 4.43 bezeichnet. Durch diese sind die eingeschweissten Schraubbolzen 6.1, 6.2 und 6.3 geführt. Der dreieckig, plattenförmig ausgebildete obere Teil des sichtbaren rechten Bremshebels 4 weist im Zentrum eine Zentrumbohrung 4.9 auf, durch welche die rechte Federhülse 8 herausragt, und so zum verstellen zugänglich ist. Der linke Bremshebel 4 ist genau gleich ausgebildet und deshalb nicht mehr dargestellt. Als Hintergrund auf der Figur 2 ist die vertikale Frontwand des Maschinenteils 1 sichtbar und im Vordergrund eine beispielhafte Ausbildung des Gabelsupports 1.1.

In der Figur 3 wird eine Bremsbackenhalterung mittels einem Exzenter 4.9 und einer Stellschraube 4.10 dargestell. Mit dieser Einrichtung erübrigt sich eine verstellbare Befestigung von Topfmagnet 5 und Ankerplatte 6 an den Bremshebeln 4.

Die in den Figuren 1, 2 und 3 dargestellte Sicherheitsscheibenbremse arbeitet wie folgt:
Im wesentlichen ist die Funktion der Sicherheitsscheibenbremse aus der Figur 1 ersichtlich. Im gezeigten Zustand ist die Magnetspule 5.5 nicht erregt, so dass die Druckfedern 9 und 10 via Federhülsen 7 und 8, Magnetkörper 5.4 und Ankerplatte 6 und die eingeschweissten Schraubbolzen 5.1/2/3 und 6.1/2/3 und die fixierenden Mutternpaare 5.11/12... und 6.11/12... auf der Betätigungsachse 12.1 eine entsprechende Kraft auf die Innenseiten der Bremshebel 4 ausüben. Im Verhältnis zu den Hebellängen zwischen Betätigungschse 12.1 - Systemdrehebene 12.4 und Systemdrehebene 12.4 - Bremsebene 12.3 wirkt eine entsprechende Bremskraft via Bremsschuhe 4.7 und Bremsbelag 4.8 auf die Bremsscheibe 3. Die Bremskraft ist innerhalb von gegebenen Grenzen durch hineindrehen oder hinausdrehen der Federhülsen in den Innengewinden 5.6 und 6.6 von Bremskörper 5.4 und Ankerplatte 6 verstellbar. Die Sechskantansätze 7.1 und 8.1 machen das Verstellen mit einem normalen Gabelschlüssel möglich. Der Lüftweg der Sicherheitsscheibenbremse ist durch den eingestellten Arbeitsluftspalt 11 gegeben, welcher beispielsweise ein bis eineinhalb Millimeter betragen kann. Es ist bei der Verwendung eines Topfmagnetes auf die extrem steile Kraft-Wegkennlinie Rücksicht zu nehmen, wobei deren Effekte in der schnell abfallenden Kraft bei Luftspaltvergrösserung und in der extrem grossen Haftkraft im geschlossenen Zustand bestehen. Letzterem wird so begegnet, dass ein nicht dargestelltes Klebblech einen Restluftspalt im erregten Zustand bewirkt und dass die Magnetspule nach erfolgtem Lüften der Bremse auf Halteerregung umgeschaltet wird. Es stellt sich ferner das Problem der synchronen Bewegung beider Bremshebel 4 beim Lüften der Bremse, weil keine mechanische Zwangsläufigkeit gegeben ist. Es ist wichtig, dass nach dem Lüften der Bremse beide Bremsbeläge 4.8 von der Bremsscheibe 3 abgehoben sind und diese keinesfalls mehr berühren. Dies wird durch entsprechendes Vorgehen beim Einstellen der Bremse erreicht. Als erstes wird die Bremsspule bei noch entspannten Druckfedern 9 und 10 und vollständig gelösten Mutternpaaren 5.11/12..., 6.11/6.12... schwach erregt, so dass der Topfmagnet 5 die Ankerplatte 6 vollständig angezogen hat und der Arbeitsluftspalt gleich Null ist. In diesem Zustand wird mittels den drei Mutterpaaren an jedem Oberteil der Bremshebel 4 ein gewünschter Lüftweg auf der Bremsscheibe 3 eingestellt, welcher dort beispielsweise o.25 mm betragen kann. Dann wird die errechnete vorgespannte Länge der Druckfedern 9 und 10 durch drehen in der entsprechenden Richtung der Federhülsen 7 und 8 provisorisch eingestellt.

Zwecks Verminderung der Reibung beim Spannen der Druckfedern 9 und 10 sind beidseitig des Federanschlagzentrums 2.3 nicht dargestellte Spurlager vorgesehen. Als nächstes wird nun durch weiteres Verstellen der Federhülsen 7 und 8 ein Kräftegleichgewicht der Druckfedern 9 und 10 eingestellt, wobei beim Erreichen dieses Gleichgewichtes ein bewegungssynchrones Arbeiten beider Bremshebel 4 die Folge ist. Dies ist auch deshalb möglich, weil mit dem Federanschlagzentrum 2.3 eine mechanische Basis in der Mitte des Systems gegeben ist. Als weiteres Problem ist jenes der Geräuschentwicklung beim Oeffnen der Bremse zu erwähnen. Diesem Problem wird so begegnet, indem durch das starre Halten und Führen von Topfmagnet 5 und Ankerplatte 6 ein vollständig paralleles Schliessen des Arbeitsluftspaltes 11 erfolgt, so dass am Schluss der Schliessbewegung ein Luftpolster schlagdämpfend wirkt. Zudem kann die als Klebblech erwähnte Luftspaltzwischenlage aus nichtmetallischem und dämpfendem Material bestehen. Die Vorschriftenkonformität der Bremse ist dadurch gegeben, dass jede Systemhälfte mechanisch völlig unabhängig von der anderen arbeitet. Würde beispielsweise irgend ein Teil einer Systemhälfte klemmen oder brechen, so schliesst die andere Systemhälfte gleichwohl und erzeugt die halbe Bremskraft, wobei die fehlerhafte Systemhälfte via einer nicht dargestellten Ueberwachungseinrichtung ein Fehlersignal erzeugt. Ein weiteres Merkmal einer Sicherheitsbremse besteht darin, dass keine gegenseitigen mechanischen Durchdringungen oder Ueberlappungen vorhanden sind, was durch Eindringen von Fremdkörpern zu Blockierungen führen könnte. Die Dreipunktbefestigung von Topfmagnet 5 und Ankerplatte 6 an den Bremshebeln 4 erlaubt ein präzises Einstellen dieser beiden Teile zueinander. Der obere Teil der Bremshebel 4 ist zu diesem Zwecke zu einer flachen Dreiecksform ausgebildet, wobei die nach aussen vorstehenden Befestigungsaugen 4.41, 4.42 und 4.43 eine zusätzlich Versteifung bewirken. Eine Handlüftung wird mittels einer aufsetzbaren, nicht dargestellten separaten Hebelzwinge vorgenommen. Die dargestellte und beschriebene Sicherheitsscheibenbremse lässt sich nicht nur für Aufzüge, sondern auch für alle anderen Arten von Hebewerken verwenden, insbesondere für solche, welche strengen Vorschriften genügen müssen. Die Hebelverhältnisse können den jeweiligen Anwendungen durch entsprechend konstruktive Aenderungen angepasst werden.

## Patentansprüche

1. Sicherheitsscheibenbremse für Aufzüge bestehend aus zwei auf Tragbolzen (1.3,1.4) drehbar gelagerten Bremshebeln (4) mit ungleich langen Hebelarmen, sowie mit Bremsschuhen (4.7) und Bremsbelägen (4.8) welche eine Bremsscheibe (3) mittels einer zwischen den jeweils längeren Bremshebelseiten wirkenden Federkraft beaufschlagen und welche durch eine auf der gleichen Seite wirkenden elektromagnetischen Gegenkraft von der Bremsscheibe (3) abgehoben werden mittels zweier überlappungsfrei und mechanisch voneinander unabhängig sich bewegender Bremshebel (4) und einem, diese gegen die Bremsfederkraft betätigenden Elektromagneten, bestehend aus einem mit dem einen Bremshebel (4) verbundenen Topfmagnet (5) dadurch gekennzeichnet, dass die Ankerplatte (6) starr mit dem anderen Bremshebel (4) verbunden ist, dass zwischen den jeweils längeren Bremshebelseiten mindesten zwei vorgespannte Bremsfedern (9,10) vorhanden sind, und dass ein mit einem Maschinengehäuse (1) verbundenes, die gegenseitige mechanische Unabhängigkeit von Bremshebeln (4) gewährleistendes Federanschlagzentrum (2.3) vorhanden ist.

2. Sicherheitsscheibenbremse nach Anspruch 1, dadurch gekennzeichnet, dass der Topfmagnet (5) und die Ankerplatte (6) je über eine an jedem Befestigungspunkt in der Arbeitsrichtung verstellbaren Dreipunktbefestigung mit einem der zwei Bremshebel (4) verbunden sind.

3. Sicherheitsscheibenbremse nach Anspruch 1, dadurch gekennzeichnet, dass der Topfmagnet (5) und die Ankerplatte (6) in ihrer Zentrumsbohrung je ein das Verstellen von Bremsfedern (9, 10) mittels drehbaren, je mit einem Aussengewinde (7.2, 8,2) versehenen Federhülsen (7, 8) ermöglichendes Innengewinde (5.6, 6.6) aufweisen.

4. Sicherheitsscheibenbremse nach Anspruch 1, dadurch gekennzeichnet, dass der Topfmagnet (5), die Ankerplatte (6) und die Druckfedern (9, 10) konzentrisch zu einer Betätigungsachse (12.1) angeordnet sind.

5. Sicherheitsscheibenbremse nach Anspruch 1, dadurch gekennzeichnet, dass die Bremsschuhhalterung als ein Exzenter-Nachstellmechanismus (4.7, 4.8, 4.9, 4.10) ausgebildet ist.

## Claims

1. Safety disc brake for lifts consisting of two brake levers (4), which are mounted to be rotatable on carrier pins (1.3, 1.4), with lever arms of unequal length, as well as with brake shoes (4.7) and brake linings (4.8), which act on a brake disc (3) by means of a spring force acting between the respective longer brake lever sides and which are lifted off from the brake disc (3) by an electromagnetic counterforce acting on the same side by means of two brake levers (4), which move free of overlap and mechanically independently of each other, and an electromagnet actuating these against the brake spring force and consisting of a pot magnet (5) connected with the one brake lever (4), characterised thereby that the armature plate (6) is rigidly connected with the other brake lever (4), that at least two biassed brake springs (9, 10) are present between the respective longer brake lever sides, and that a spring abutment centre (2.3) is present, which is connected with a machine housing (1) and ensures the mutual mechanical independence of the brake levers (4).

2. Safety disc brake according to claim 1, characterised thereby, that the pot magnet (5) and the armature plate (6) are each connected by way of a respective three-point fastening, which is adjustable in the operative direction at each fastening point, with one of the two brake levers (4).

3. Safety disc brake according to claim 1, characterised thereby, that the pot magnet (5) and the armature plate (6) in their central bore each have a respective internal thread (5.6, 6.6) enabling the adjustment of brake springs (9, 10) by means of rotatable spring sleeves (7, 8) each provided with a respective external thread (7.2, 8.2).

4. Safety disc brake according to claim 1, characterised thereby, that the pot magnet (5), the armature plate (6) and the compression springs (9, 10) are arranged concentrically with an axis (12.1) of actuation.

5. Safety disc brake according to claim 1, characterised thereby, that the brake shoe mounting is constructed as an eccentric tracking adjustment mechanism (4.7, 4.8, 4.9, 4.10).

## Revendications

1. Frein à disque de sécurité pour ascenseurs, composé de deux leviers de frein (4) montés en rotation sur des axes d'appui (1.3, 1.4) et pourvus de bras de levier de longueurs inégales, composé également de sabots de frein (4.7) et de garnitures de frein (4.8) qui sollicitent un disque de frein (3) à l'aide d'une force élastique agissant entre les côtés les plus longs des leviers de frein et qui sont décollées du disque de frein (3) par une force antagoniste électromagnétique agissant du même côté, à l'aide de deux leviers de frein (4) se déplaçant sans se chevaucher et mécaniquement indépendamment l'un de l'autre, et composé enfin d'un électro-aimant qui actionne ces leviers de frein à l'encontre de la force élastique de freinage et qui se compose d'un électro-aimant cuirassé (5) relié à un bras de levier (4), caractérisé en ce que la plaque d'armature (6) est reliée de façon rigide à l'autre levier de frein (4), en ce qu'il est prévu, entre les côtés les plus longs des leviers de frein, au moins deux ressorts de frein précontraints (9, 10), et en ce qu'il est prévu un centre de butée de ressorts (2.3) relié à un carter de machine (1), qui garantit l'indépendance mécanique mutuelle des leviers de frein (4).

2. Frein à disque de sécurité selon la revendication 1, caractérisé en ce que l'électro-aimant cuirassé (5) et la plaque d'armature (6) sont reliés chacun à l'un des deux leviers de frein (4) par l'intermédiaire d'une fixation en trois points réglable à chaque point de fixation dans le sens de fonctionnement.

3. Frein à disque de sécurité selon la revendication 1, caractérisé en ce que l'électro-aimant cuirassé (5) et la plaque d'armature (6) présentent chacun, dans leur perçage central, un filetage intérieur (5.6, 6.6) permettant le réglage de ressorts de frein (9, 10) à l'aide de manchons élastiques (7, 8) rotatifs pourvus d'un filetage extérieur (7.2, 8.2).

4. Frein à disque de sécurité selon la revendication 1, caractérisé en ce que l'électro-aimant cuirassé (5), la plaque d'armature (6) et les ressorts de compression (9, 10) sont disposés de façon concentrique par rapport à un axe d'actionnement (12.1).

5. Frein à disque de sécurité selon la revendication 1, caractérisé en ce que la fixation de sabots de frein est conçue comme un mécanisme de rajustement à excentrique (4.7, 4.8, 4.9, 4.10).
